# EUROPÄISCHE PATENTSCHRIFT

(11) **EP 2 981 468 B1**
(45) Veröffentlichungstag und Bekanntmachung des Hinweises auf die Patenterteilung: **16.08.2017**
(21) Anmeldenummer: 14715562.6
(22) Anmeldetag: 27.03.2014
(51) Int. Cl.: B64D 11/06, B60N 2/015, F16B 2/18

(54) **SITZBEFESTIGUNG**
SEAT MOUNT
SUPPORT DE SIÈGE

(30) Priorität: 05.04.2013 DE 102013103435
(43) Veröffentlichungstag der Anmeldung: 10.02.2016
(73) Patentinhaber: Recaro Aircraft Seating GmbH & Co. KG, 74523 Schwäbisch Hall (DE)
(72) Erfinder: MEJUHAS, Marsel, Schwäbisch Hall 74523 (DE)
(74) Vertreter: Daub, Thomas
(86) Internationale Anmeldenummer: PCT/EP2014/056140
(87) Internationale Veröffentlichungsnummer: WO 2014/161764

(56) Entgegenhaltungen:
- EP-A2- 1 775 217
- WO-A1-2010/016086
- DE-A1-102011 013 688
- US-A1- 2012 217 368

## Beschreibung

### Stand der Technik

Die Erfindung betrifft eine Sitzbefestigung nach dem Oberbegriff des Patentanspruchs 1.

Die Aufgabe der Erfindung besteht insbesondere darin, eine gattungsgemäße Sitzbefestigung mit verbesserten Eigenschaften hinsichtlich einer Montage bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können. DE 102011013688 A1 offenbart die Merkmale des Oberbegriffs des Anspruchs 1.

### Vorteile der Erfindung

Die Erfindung geht aus von einer Sitzbefestigung zur Befestigung eines Sitzes, insbesondere eines Flugzeugsitzes, an einer Befestigungsschiene, mit zumindest einem Grundkörper, der zumindest zur vertikalen Befestigung in der Befestigungsschiene vorgesehen ist, und mit zumindest einem Horizontalbefestigungselement, das zumindest zwischen einer Verriegelstellung und einer Entriegelstellung relativ zu dem Grundkörper verschiebbar ist.

Es wird vorgeschlagen, dass die Sitzbefestigung zumindest eine Verriegelungsvorrichtung aufweist, die dazu vorgesehen ist, das zumindest eine Horizontalbefestigungselement in der Entriegelstellung zu fixieren. Unter einer "Befestigung" soll dabei insbesondre ein festes, starres Anbinden an ein Element, insbesondere an eine Befestigungsschiene, verstanden werden. Unter einem "Grundkörper" soll in diesem Zusammenhang insbesondere ein Element verstanden werden, das zur Anbindung an die Befestigungsschiene vorgesehen ist und das insbesondere zur Übertragung von Kräften, die von einem an ihm befestigten Element, vorzugsweise von einem Flugzeugsitz, in das Element eingeleitet werden, an die Befestigungsschiene vorgesehen ist. Unter einer "Befestigungsschiene" soll insbesondere eine Schiene verstanden werden, die vorzugsweise ein Hohlprofil ausbildet, das zur formschlüssigen Verbindung mit einem Element, insbesondere dem Grundkörper der Sitzbefestigung, vorgesehen ist. Dabei ist es ebenfalls denkbar, dass die Befestigungsschiene ein Profil mit einem Hinterschnitt aufweist und ein Element, beispielsweise eine Sitzbefestigung mit einem Hohlprofil, in die Befestigungsschiene eingreift. Unter einem "Horizontalbefestigungselement" soll dabei insbesondere ein Element verstanden werden, das in zumindest einer Betriebsstellung die Sitzbefestigung in einer Horizontalrichtung, insbesondere in einer Längsrichtung der Befestigungsschiene, in der Befestigungsschiene fixieren kann. Unter einer "Verriegelstellung" soll dabei insbesondere eine Stellung des Horizontalbefestigungselements verstanden werden, in der das Horizontalbefestigungselement den Grundkörper in der Befestigungsschiene in Horizontalrichtung fixiert. Unter einer "Entriegelstellung" soll dabei insbesondere eine Stellung des Horizontalbefestigungselements verstanden werden, in der das Horizontalbefestigungselement den Grundkörper in der Befestigungsschiene in der Horizontalrichtung freigibt und insbesondere nicht fixiert, wodurch ein Verschieben des Grundkörpers und dadurch der Sitzbefestigung in der Befestigungsschiene möglich ist. Unter "fixieren" soll dabei insbesondere zu einem bestimmten Element, wie insbesondere dem Grundkörper, feststellen verstanden werden. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Dadurch kann die Sitzbefestigung besonders vorteilhaft ausgebildet werden, so dass insbesondere bei einem Verschieben eines, mittels mehrerer Sitzbefestigungen an Befestigungsschienen befestigten Sitzes die Sitzbefestigungen in der Befestigungsschiene verfahren werden können, ohne dass das Horizontalbefestigungselement einer Sitzbefestigung in die entsprechende Befestigungsschiene eingreift und ein Verschieben des Sitzes erschwert. Durch die erfindungsgemäße Ausgestaltung der Sitzbefestigung kann dadurch eine Montage von Sitzen, insbesondere von Flugzeugsitzen in Befestigungsschienen, erleichtert werden.

Weiter wird vorgeschlagen, dass das Horizontalbefestigungselement den Grundkörper umgreift. Unter "den Grundkörper umgreifen" soll dabei insbesondere verstanden werden, dass das Horizontalbefestigungselement den Grundkörper zumindest zu einer Seite hin, vorzugsweise zu zumindest zwei Seiten hin und insbesondere zu drei Seiten hin nach außen begrenzt. Dabei soll unter "umgreifen" insbesondere auch verstanden werden, dass das Horizontalbefestigungselement außen auf dem Grundkörper aufliegt. Dabei soll insbesondere auch darunter verstanden werden, dass das Horizontalbefestigungselement nicht innerhalb des Grundkörpers angeordnet ist. Dadurch kann das Horizontalbefestigungselement besonders vorteilhaft ausgebildet und einfach mit dem Grundkörper gekoppelt werden.

Weiter wird vorgeschlagen, dass die Verriegelungsvorrichtung zu einer Verstellung des Horizontalbefestigungselements zwischen seiner Verriegelstellung und seiner Entriegelstellung dazu vorgesehen ist, das Horizontalbefestigungselement sowohl in Vertikalrichtung als auch in Horizontalrichtung zu bewegen. Unter einer "Vertikalrichtung" soll dabei insbesondere eine Richtung verstanden werden, die orthogonal auf einer Längsrichtung, in der der Grundkörper seine Haupterstreckungsrichtung aufweist, und orthogonal zu einer Querrichtung, in der der Grundkörper seine kleinste Erstreckungsrichtung aufweist, steht. Die Vertikalrichtung ist dabei insbesondere in einem in einem Flugzeug eingebauten Zustand von einer Richtung gebildet, die orthogonal auf einer Ebene des Kabinenbodens, auf dem die Sitze mittels der Befestigungsschienen befestigt sind, steht. Unter einer "Horizontalrichtung" soll dabei insbesondere eine Richtung verstanden werden, die parallel zu einer Längsrichtung, also insbesondere einer Haupterstreckungsrichtung des Grundkörpers und der Sitzbefestigung, verläuft. Dabei liegt die Horizontalrichtung vorzugsweise parallel zu einer Längserstreckung der Befestigungsschiene, in der die Sitzbefestigung befestigbar ist, und damit in einem in einem Flugzeug eingebauten Zustand in einer Ebene eines Kabinenbodens. Dabei wird das Horizontalbefestigungselement in Horizontalrichtung lediglich um einen Bruchteil einer Strecke bewegt, um die das Horizontalbefestigungselement bei der Verstellung in Vertikalrichtung bewegt wird. Dadurch kann die Entriegelstellung des Horizontalbefestigungselements besonders vorteilhaft ausgebildet werden.

Zudem wird vorgeschlagen, dass die Verriegelungsvorrichtung zumindest eine Hebeleinheit umfasst, über die das Horizontalbefestigungselement zwischen der Verriegelstellung und der Entriegelstellung verstellbar ist. Unter einer "Hebeleinheit" soll dabei insbesondere ein schwenkbares Element verstanden werden, das vorzugsweise schwenkbar an dem Horizontalbefestigungselement angebracht ist. Grundsätzlich soll hierbei erwähnt werden, dass die Verriegelungsvorrichtung zur Verstellung des Horizontalbefestigungselements auch andere Verstelleinheiten aufweisen kann, die das Horizontalbefestigungselement beispielsweise durch eine lineare Verschiebung, eine Verdrehung oder eine Verkippung zwischen der Verriegelstellung und der Entriegelstellung verstellen. Dabei könnte die Verstelleinheit beispielsweise als eine Linearführung, die von Führungsschienen ausgebildet sind, ausgebildet sein. Dadurch kann das Horizontalbefestigungselement besonders vorteilhaft und einfach zwischen der Verriegelstellung und der Entriegelstellung verstellt werden.

Weiterhin wird vorgeschlagen, dass die Sitzbefestigung zumindest ein Abstützelement aufweist, das zu einer Abstützung der Hebeleinheit zumindest während einer Verstellung des Horizontalbefestigungselements und der Verriegelstellung vorgesehen ist. Unter einem "Abstützelement" soll dabei insbesondere ein Element verstanden werden, das insbesondere korrespondierend zu der Hebeleinheit ausgebildet ist und eine derartige Kontur aufweist, dass durch eine Abstützung der Hebeleinheit an dem Abstützelement eine Bewegung des mit der Hebeleinheit verbundenen Horizontalbefestigungselements erreicht wird, durch die das Horizontalbefestigungselement zwischen der Verriegelstellung und der Entriegelstellung verfahren werden kann. Grundsätzlich ist es auch denkbar, dass die Hebeleinheit zusätzlich oder ausschließlich über ein Formschlusselement, wie beispielsweise einem Rastelement, mit dem Grundkörper verbindbar ist und dadurch in der Verriegelstellung an dem Grundkörper fest positioniert wird. Dadurch kann das Horizontalbefestigungselement besonders einfach und präzise zwischen der Verriegelstellung und der Entriegelstellung verfahren werden.

Ferner wird vorgeschlagen, dass das Abstützelement als eine an den Grundkörper angeformte Erhebung ausgebildet ist. Unter "an den Grundkörper angeformt" soll dabei insbesondere verstanden werden, dass das Abstützelement einstückig mit dem Grundkörper und als eine Erhebung ausgebildet ist. Dadurch kann das Abstützelement insbesondere einfach und vorteilhaft ausgebildet werden.

Es wird weiter vorgeschlagen, dass der Grundkörper ein Formschlusselement umfasst, auf dem das Horizontalbefestigungselement in der Entriegelstellung zur Fixierung aufliegt. Unter einem "Formschlusselement" soll dabei insbesondere ein Element verstanden werden, das mittels eines geometrischen Eingriffs mit einem korrespondierenden Formschlusselement und/oder einer Auflage auf einem korrespondierenden Formschlusselement eine formschlüssige Verbindung eingehen kann. Unter "aufliegen" soll dabei insbesondere verstanden werden, dass das Horizontalbefestigungselement direkt mit dem Formschlusselement in einem Kontakt steht. Dadurch kann das Horizontalbefestigungselement besonders einfach in der Entriegelstellung zu dem Grundkörper fixiert werden.

Weiter wird vorgeschlagen, dass das Formschlusselement als eine an den Grundkörper angeformte Erhebung ausgebildet ist. Unter "an den Grundkörper angeformt" soll dabei insbesondere verstanden werden, dass das Formschlusselement einstückig mit dem Grundkörper ausgebildet ist. Dadurch kann das Formschlusselement des Grundkörpers besonders einfach ausgebildet werden.

Zudem wird vorgeschlagen, dass das Horizontalbefestigungselement ein Formschlusselement aufweist, das zumindest in der Entriegelstellung formschlüssig selbsthemmend mit dem Formschlusselement des Grundkörpers verbunden ist. Unter "selbsthemmend" soll dabei insbesondere verstanden werden, dass die Formschlusselemente des Horizontalbefestigungselements und des Grundkörpers einen durch Reibung verursachten Widerstand gegen ein Verrutschen, also gegen ein Lösen der formschlüssigen Verbindung, aufweisen. Unter "formschlüssig" soll insbesondere verstanden werden, dass aneinander liegende Flächen von miteinander formschlüssig verbundenen Bauteilen eine in Normalenrichtung der Flächen wirkende Haltekraft aufeinander ausüben. Insbesondere befinden sich die Bauteile in einem geometrischen Eingriff miteinander. Unter "formschlüssig verbunden" soll dabei insbesondere verstanden werden, dass das Horizontalbefestigungselement und der Grundkörper mittels eines Formschlusses miteinander gekoppelt sind. Dadurch kann die formschlüssige Verbindung zwischen dem Horizontalbefestigungselement und dem Grundköper besonders vorteilhaft ausgebildet werden.

Ferner wird vorgeschlagen, dass die Sitzbefestigung zumindest ein Befestigungselement zu einer Fixierung des Grundkörpers aufweist, wobei die Verriegelungsvorrichtung zumindest in der Verriegelstellung dazu vorgesehen ist, das Befestigungselement zu sichern. Unter einem "Befestigungselement" soll dabei insbesondere ein Element verstanden werden, dass zwei Elemente, insbesondere das Horizontalbefestigungselement und den Grundkörper fest miteinander verbindet. Dabei ist das Befestigungselement vorzugsweise als eine Befestigungsschraube ausgebildet, die ein Gewinde umfasst, mittels dem die Befestigungsschraube über ein korrespondierend ausgebildetes Gegengewinde in dem Grundkörper fest mit dem Grundkörper verbindbar ist. Grundsätzlich ist es auch denkbar, dass das Befestigungselement als ein exzentrisches Befestigungselement ausgebildet ist, das einen exzentrischen Bereich aufweist, der durch Rotation des Befestigungselements in einen formschlüssigen Eingriff mit einem Formschlusselement des Grundkörpers gebracht werden kann um das Horizontalbefestigungselement fest mit dem Grundkörper zu verbinden. Unter "das Befestigungselement zu sichern" soll dabei insbesondere verstanden werden, dass die Verriegelungsvorrichtung in der Verriegelstellung ein Lösen, also vorzugsweise ein Verdrehen des Befestigungselements, vorzugsweise durch einen formschlüssigen Eingriff in das Befestigungselement, verhindert. Dadurch kann vorteilhaft ein versehentliches Lösen des Befestigungselements, beispielsweise durch Vibration, verhindert werden.

Weiterhin wird vorgeschlagen, dass die Hebeleinheit ein Formschlusselement ausbildet, das zumindest in einer Verriegelstellung zur Sicherung des Befestigungselements formschlüssig in das Befestigungselement eingreift. Dadurch kann das Befestigungselement besonders einfach und sicher gegen ein Verdrehen gesichert werden.

Die erfindungsgemäße Sitzbefestigung soll hierbei nicht auf die oben beschriebene Anwendung und Ausführungsform beschränkt sein. Insbesondere kann die erfindungsgemäße Sitzbefestigung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Seitenansicht einer erfindungsgemäßen Sitzbefestigung mit einem Grundkörper und einem Horizontalbefestigungselement, das in einer Entriegelstellung ist,
- Fig. 2: die Sitzbefestigung in fest mit einer Befestigungsschiene verbundenem Zustand mit dem Horizontalbefestigungselement in einer Verriegelstellung,
- Fig. 3: eine schematische Ansicht eines Teils des Grundkörpers und des Horizontalbefestigungselements auf eine Unterseite,
- Fig. 4: eine Schnittansicht durch einen Ausschnitt des Horizontalbefestigungselements und ein Befestigungselement und eine Hebeleinheit einer Verriegelungsvorrichtung in einem verriegelten Zustand,
- Fig. 5: eine gleiche Ansicht wie in Figur 4, wobei die Hebeleinheit in einer entriegelten Stellung ist,
- Fig. 6: eine Seitenansicht der Sitzbefestigung während einer Verstellung des Horizontalbefestigungselements zwischen der Verriegelstellung und der Entriegelstellung,
- Fig. 7: die Sitzbefestigung mit dem Horizontalbefestigungselement in der Entriegelstellung und
- Fig. 8: die Sitzbefestigung und die Befestigungsschiene in einer schematischen Darstellung.

### Beschreibung des Ausführungsbeispiels

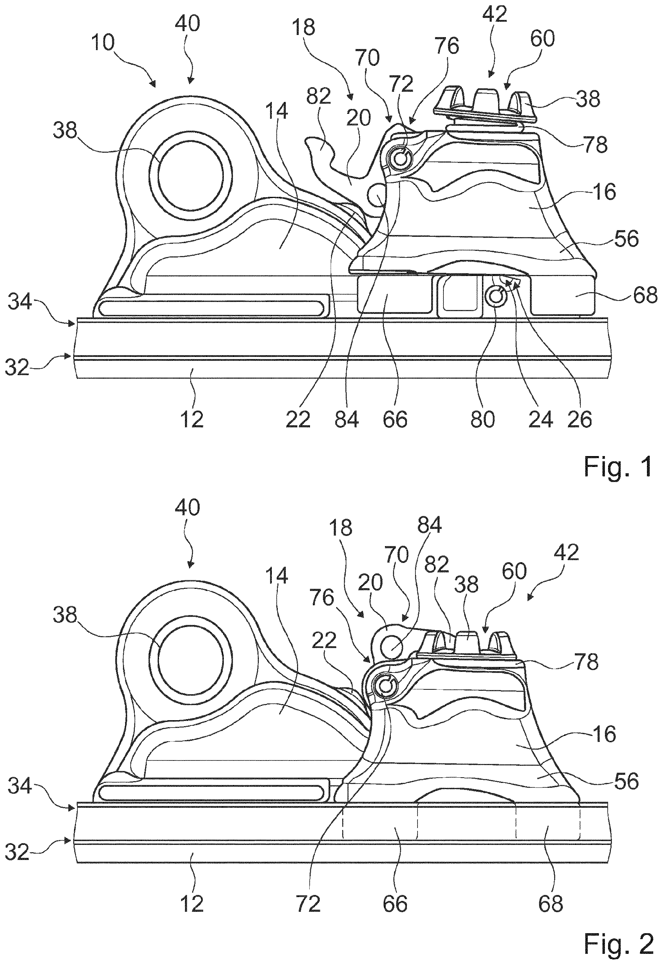

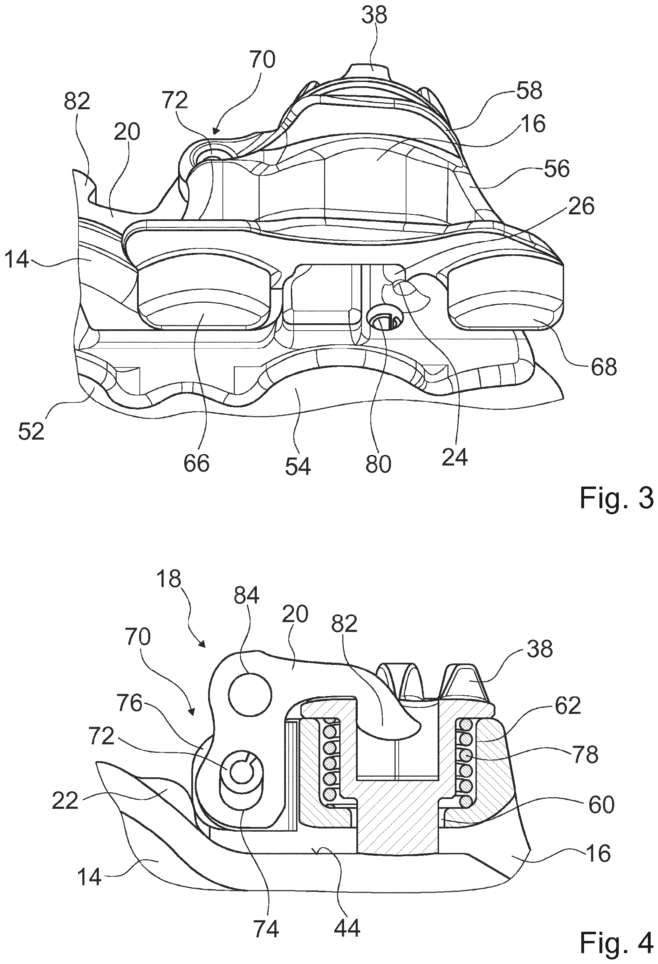

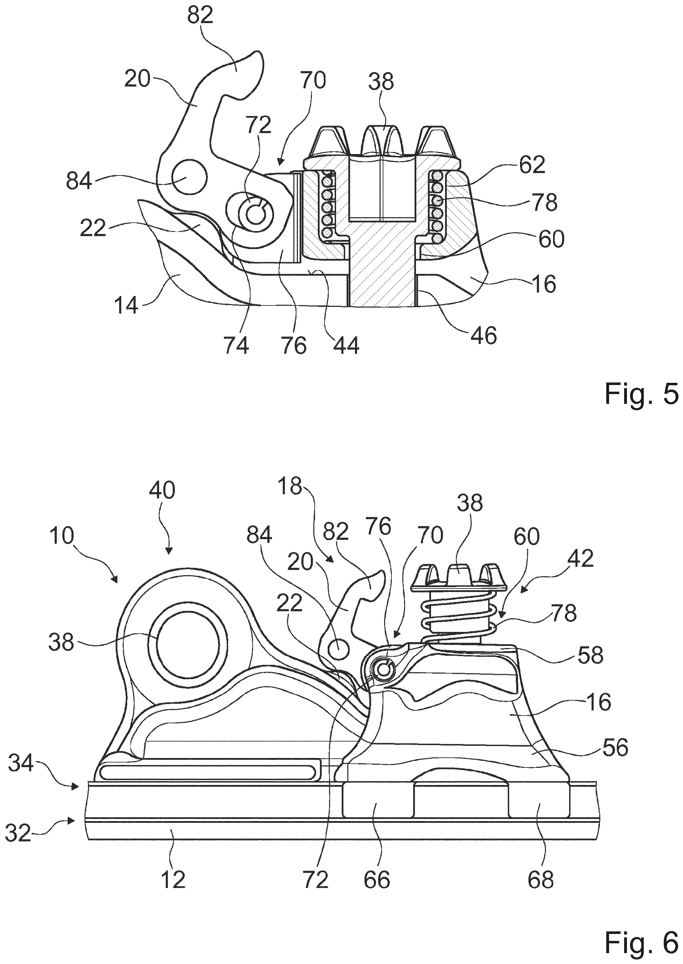

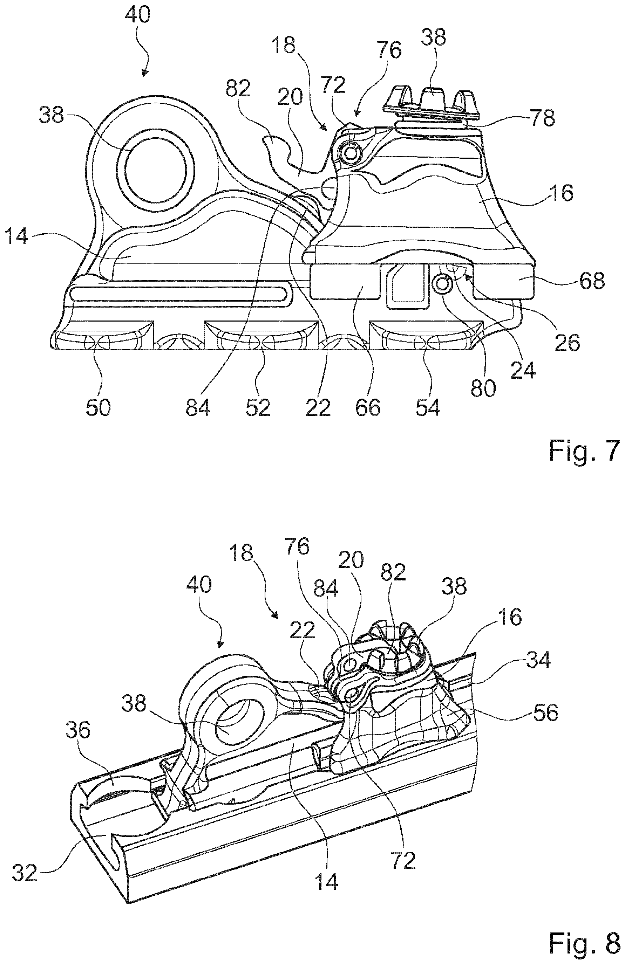

Die Figuren 1 bis 8 zeigen eine erfindungsgemäße Sitzbefestigung 10. Die Sitzbefestigung 10 ist zur Befestigung eines Flugzeugsitzes an einem Transportmittel, wie insbesondere zur Befestigung in einem Flugzeug, vorgesehen. Das Flugzeug weist zur Befestigung von Flugzeugsitzen parallel zueinander verlaufende Befestigungsschienen 12 auf, die in einen Kabinenboden des Flugzeugs integriert sind. Dabei sind jeweils zumindest zwei oder mehrere Befestigungsschienen 12 zur Befestigung eines Flugzeugsitzes oder aus mehreren Flugzeugsitzen bestehenden Flugzeugsitzreihen vorgesehen. Die Befestigungsschienen 12 sind jeweils als Hohlprofile ausgebildet. Dabei weisen die Befestigungsschienen 12 jeweils T-förmige Längsnuten 32 auf, in denen die Sitzbefestigung 10 zur Befestigung des Flugzeugsitzes teilweise angeordnet ist. Mit ihrer Oberseite schließen die Befestigungsschienen 12 vorzugsweise eben mit dem Kabinenboden des Flugzeugs ab. Die Befestigungsschienen 12 verlaufen dabei vorzugsweise im Wesentlichen parallel zu einer Längsrichtung des Kabinenbodens. An der Oberseite der Befestigungsschienen 12 ist ein schmaler Längskanal 34 angeordnet, der die T-Förmige Längsnut 32 zu der Oberseite hin öffnet. Der Längskanal 34 weist dabei in einem definierten Raster angeordnete Durchtrittsöffnungen 36 auf, die den Längskanal 34 jeweils in einem Teilbereich verbreitern. Die Durchtrittsöffnungen 36 weisen dabei eine kreisförmige Grundform auf. Die Durchtrittsöffnungen 36 verbinden dabei jeweils die Oberseite der Befestigungsschiene 12 mit einem unteren, breiten Bereich der T-förmigen Längsnut 32. Dabei sind zur Befestigung eines Flugzeugsitzes oder einer Flugzeugsitzreihe mehrere Sitzbefestigungen 10 vorgesehen. Die erfindungsgemäße Sitzbefestigung 10 ist zur Befestigung eines hinteren Teils eines Sitzes an der entsprechenden Befestigungsschiene 12 vorgesehen. Zur Befestigung eines vorderen Teils des entsprechenden Flugzeugsitzes sind andere, nicht näher dargestellte Sitzbefestigungen vorgesehen, die ebenfalls teilweise in den Befestigungsschienen 12 angeordnet sind. Im Folgenden ist lediglich eine Sitzbefestigung 10 beschrieben, wobei andere Sitzbefestigungen 10 zur Befestigung eines hinteren Teils des Flugzeugsitzes äquivalent ausgebildet sind.

Die Sitzbefestigung 10 umfasst einen Grundkörper 14. Der Grundkörper 14 ist zur Führung der Sitzbefestigung 10 in der entsprechenden Befestigungsschiene 12 und zu einer Anbindung an den Flugzeugsitz vorgesehen. Der Grundkörper 14 ist aus einem Metall, wie beispielsweise aus einem Edelstahl, einem Titan oder einer Aluminiumlegierung, gebildet. Grundsätzlich ist es auch denkbar, dass der Grundkörper 14 aus einem anderen, dem Fachmann als sinnvoll erscheinenden Material, wie beispielsweise aus einem Kunststoff oder einem anderen Metall, gebildet ist. Der Grundkörper 14 weist eine längliche Grundform auf. In einem in der Befestigungsschiene 12 angeordneten Zustand verläuft eine lange Seite des Grundkörpers 14 parallel zu der Befestigungsschiene 12. Eine maximale Breite des Grundkörpers 14 ist dabei kleiner als eine Breite der Befestigungsschiene 12. In einem vorderen Bereich bildet der Grundkörper 14 ein Befestigungselement 38 aus. Das Befestigungselement 38 ist dabei als ein Durchgangsloch ausgebildet, das sich quer zu der langen Seite des Grundkörpers 14 erstreckt und den Grundkörper 14 in seiner ganzen Breite durchdringt. Dabei weist der Grundkörper 14 in dem vorderen Bereich 40, in dem das Befestigungselement 38 angeordnet ist, eine maximale Höhe auf und erstreckt sich dadurch in einem montierten Zustand in dem vorderen Bereich 40 am weitesten von der Befestigungsschiene 12 weg. In einem hinteren Bereich 42 weist der Grundkörper 14 eine geringere Höhe auf als in dem vorderen Bereich 40. Die Höhe des Grundkörpers 14 nimmt dabei von dem vorderen Bereich 40 bis in den hinteren Bereich 42 stetig ab, wobei der Grundkörper 14 in dem hinteren Bereich 42 ein Plateau 44 ausbildet, das eine gleich bleibende Höhe aufweist. In dem Bereich des Plateaus 44 weist der Grundkörper 14 ein in Vertikalrichtung orientiertes Durchgangsloch 46 auf, das von dem Plateau 44 bis zu einer Unterseite 48 des Grundkörpers 14 reicht. Das Durchgangsloch 46 weist dabei ein nicht näher dargestelltes Innengewinde auf. An der Unterseite 48, die in einem mit der Befestigungsschiene 12 verbundenen Zustand der Befestigungsschiene 12 zugewandt ist, weist der Grundkörper 14 an seinen Längsseiten jeweils drei Formschlusselemente 50, 52, 54 auf, die dazu vorgesehen sind, in die Befestigungsschiene 12 einzugreifen. Die Formschlusselemente 50, 52, 54 sind einstückig mit dem Grundkörper 14 ausgebildet. Die Formschlusselemente 50, 52, 54 sind dabei entlang der langen Seite des Grundkörpers 14 beabstandet zueinander angeordnet. Dabei weisen die auf einer Längsseite angeordneten Formschlusselemente 50, 52, 54 jeweils einen Abstand zueinander auf, der einem Abstand der Durchtrittsöffnungen 36 der Befestigungsschiene 12 entspricht. Dabei sind jeweils zwei Formschlusselemente 50, 52, 54 auf den unterschiedlichen Längsseiten paarweise, an einer gleichen Position in Längsrichtung angeordnet. Die Formschlusselemente 50, 52, 54 sind als kreissegmentförmige Erhebungen ausgebildet, die sich von dem Grundkörper 14 orthogonal zu der Längsrichtung erheben. Die Formschlusselemente 50, 52, 54 bilden dabei zusammen mit dem Grundkörper 14, in einer Draufsicht gesehen, einen ovalen Querschnitt aus. Dabei ist der ovale Querschnitt kleiner ausgebildet als die Durchtrittsöffnungen 36 der Befestigungsschiene 12, wodurch der Grundkörper 14 mit seinen Formschlusselementen 50, 52, 54 durch die Durchtrittsöffnungen 36 in die T-förmige Längsnut 32 der Befestigungsschiene 12 eingeführt werden kann, um den Grundkörper 14 mit der Befestigungsschiene 12 formschlüssig zu verbinden. Durch Einführen der Formschlusselemente 50, 52, 54 des Grundkörpers 14 durch die Durchtrittsöffnungen 36 in die T-förmige Längsnut 32 und anschließendes Verschieben des Grundkörpers 14 innerhalb der T-förmigen Längsnut 32 in eine Stellung, in der die Formschlusselemente 50, 52, 54 des Grundkörpers 14 nicht deckungsgleich mit den Durchtrittsöffnungen 36 sind, ist der Grundkörper 14 in Vertikalrichtung mit der Befestigungsschiene 12 verbunden.

Zur Verriegelung der Sitzbefestigung 10 in Horizontalrichtung weist die Sitzbefestigung 10 ein Horizontalbefestigungselement 16 auf. Das Horizontalbefestigungselement 16 ist als ein separates, von dem Grundkörper 14 getrenntes Bauteil ausgebildet. Zur Bildung der Sitzbefestigung 10 ist das Horizontalbefestigungselement 16 an den Grundkörper 14 montiert. Das Horizontalbefestigungselement 16 weist zwei Seitenbereiche 56 auf, die beabstandet zueinander angeordnet sind und die in einem auf dem Grundkörper 14 montierten Zustand jeweils auf einer Längsseite des Grundkörpers 14 angeordnet sind. An einer oberen Seite, die in dem montierten Zustand dem Grundkörper 14 abgewandt ist, sind die zwei Seitenbereiche 56 des Horizontalbefestigungselements 16 über einen Mittelbereich 58 einstückig miteinander verbunden. In dem Mittelbereich 58 weist das Horizontalbefestigungselement 16 ein in Vertikalrichtung orientiertes Durchgangsloch 60 auf, das in einem montierten Zustand, zumindest in einem Betriebszustand, in dem die Sitzbefestigung 10 fest mit der Befestigungsschiene 12 verbunden ist, deckungsgleich zu dem Durchgangsloch 46 des Grundkörpers 14 ausgerichtet ist. Das Durchgangsloch 60 weist dabei eine Senkung 62 auf, die einen größeren Durchmesser aufweist als das Durchgangsloch 60. An seiner Unterseite 64, die in montiertem Zustand dem Grundkörper 14 und der Befestigungsschiene 12 zugewandt ist, weist das Horizontalbefestigungselement 16 vier Horizontalformschlusselemente 66, 68 auf. Dabei sind je zwei Horizontalformschlusselemente 66, 68 an einem Seitenbereich des Horizontalbefestigungselements 16 angeordnet. Die Horizontalformschlusselemente 66, 68 erstrecken sich dabei von der Unterseite 64 des Horizontalbefestigungselements 16 weg und weisen eine zu den Durchtrittsöffnungen 36 der Befestigungsschiene 12 korrespondierende Kontur auf. Dabei sind die zwei an einem Seitenbereich des Horizontalbefestigungselements 16 angeordneten Horizontalformschlusselemente 66, 68 jeweils mit einem Abstand zueinander angeordnet, der einem Abstand von zwei benachbarten Durchtrittsöffnungen 36 der Befestigungsschiene 12 entspricht. Zur Horizontalbefestigung der Sitzbefestigung 10 in der Befestigungsschiene 12 sind die Horizontalformschlusselemente 66, 68 in Durchtrittsöffnungen 36 der Befestigungsschiene 12 angeordnet und binden die Sitzbefestigung 10 so in Horizontalrichtung formschlüssig an die Befestigungsschiene 12 an.

Das Horizontalbefestigungselement 16 weist eine Verriegelstellung und eine Entriegelstellung auf. In der Verriegelstellung und der Entriegelstellung weist das Horizontalbefestigungselement 16 jeweils eine andere Position zu dem Grundkörper 14 der Sitzbefestigung 10 auf. Das Horizontalbefestigungselement 16 ist zwischen der Verriegelstellung und der Entriegelstellung relativ zu dem Grundkörper 14 verschiebbar. In der Verriegelstellung sind die Horizontalformschlusselemente 66, 68 in Durchtrittsöffnungen 36 der Befestigungsschiene 12 angeordnet und fixieren die Sitzbefestigung 10 so in Horizontalrichtung in der Befestigungsschiene 12, während die Formschlusselemente 50, 52, 54 des Grundkörpers 14 über die T-förmige Längsnut 32 die Sitzbefestigung 10 in Vertikalrichtung formschlüssig mit der Befestigungsschiene 12 verbinden. In der Entriegelstellung sind die Horizontalformschlusselemente 66, 68 aus den Durchtrittsöffnungen 36 der Befestigungsschiene 12 herausgehoben und stehen in keiner formschlüssigen Verbindung mit der Befestigungsschiene 12. Dadurch kann die Sitzbefestigung 10 in der Entriegelstellung des Horizontalbefestigungselements 16 in Längsrichtung in der Befestigungsschiene 12 verschoben werden. Sind alle Sitzbefestigungen 10, die einen Flugzeugsitz über Befestigungsschienen 12 anbinden, in der Entriegelstellung, kann der Flugzeugsitz entlang der Befestigungsschienen 12 verschoben werden.

Die Sitzbefestigungsvorrichtung umfasst eine Verriegelungsvorrichtung 18. Die Verriegelungsvorrichtung 18 ist dazu vorgesehen, das Horizontalbefestigungselement 16 in der Entriegelstellung zu fixieren. Dabei fixiert die Verriegelungsvorrichtung 18 das Horizontalbefestigungselement 16 in der Entriegelstellung, in der die Horizontalformschlusselemente nicht in die Durchtrittsöffnungen 36 der Befestigungsschiene 12 eingreifen, und hält die Sitzbefestigung 10 so in einer Betriebsstellung, in der die Sitzbefestigung 10 in Längsrichtung in der Befestigungsschiene 12 verschoben werden kann.

Die Verriegelungsvorrichtung 18 ist dazu vorgesehen, das Horizontalbefestigungselement 16 zwischen seiner Verriegelstellung und seiner Entriegelstellung zu verstellen. Dabei ist die Verriegelungsvorrichtung 18 dazu vorgesehen, das Horizontalbefestigungselement 16 bei einer Verstellung zwischen seiner Verriegelstellung und seiner Entriegelstellung sowohl in Vertikalrichtung als auch in Horizontalrichtung zu bewegen. Eine Bewegung des Horizontalbefestigungselements 16 während einer Verstellung zwischen der Verriegelstellung und der Entriegelstellung in Vertikalrichtung ist dabei um ein Vielfaches größer als die Bewegung des Horizontalbefestigungselements 16 in Horizontalrichtung. Bei der Verstellung des Horizontalbefestigungselements 16 von der Verriegelstellung in die Entriegelstellung wird das Horizontalbefestigungselement 16 mittels der Verriegelungsvorrichtung 18 zunächst in Vertikalrichtung angehoben und so aus den Durchtrittsöffnungen 36 der Befestigungsschiene 12 gehoben und dann in Horizontalrichtung in Richtung eines hinteren Bereichs des Grundkörpers 14 verschoben und in einer Entriegelposition abgelegt.

Zur Verstellung des Horizontalbefestigungselements 16 weist die Verriegelungsvorrichtung 18 eine Hebeleinheit 20 auf. Über die Hebeleinheit 20 ist das Horizontalbefestigungselement 16 zwischen der Verriegelstellung und der Entriegelstellung verstellbar. Die Hebeleinheit 20 ist dabei schwenkbar mit dem Horizontalbefestigungselement 16 verbunden. Dazu weist das Horizontalbefestigungselement 16 an einer in montiertem Zustand dem vorderen Bereich des Grundkörpers 14 zugewandten Seite eine Aufnahme 70 auf, die zur Lagerung der Hebeleinheit 20 vorgesehen ist. Die Aufnahme 70 umfasst eine Lagerachse 72, auf der die Hebeleinheit 20 schwenkbar gelagert ist. Die Lagerachse 72 verläuft dabei orthogonal zu der Längsrichtung und der Vertikalrichtung. Zur Anbindung der Hebeleinheit 20 an das Horizontalbefestigungselement 16 bildet die Hebeleinheit 20 ein Durchgangsloch 74 aus, das formschlüssig mit der Lagerachse 72 der Aufnahme 70 des Horizontalbefestigungselements 16 gekoppelt ist. Das Durchgangsloch 74 ist dabei als ein Langloch ausgebildet.

Zur Sicherung der Hebeleinheit 20 weist die Sitzbefestigung 10 ein Federelement 76 auf, das in der Aufnahme für die Hebeleinheit 20 angeordnet ist. Das Federelement 76 ist als ein U-Profil ausgebildet, wobei zwei federnde Seiten des Federelements 76 in einem montierten Zustand orthogonal zu der Lagerachse 72 ausgerichtet sind. Die federnden Seiten des Federelements 76 sind dazu vorgesehen, in montiertem Zustand gegen Seitenflächen der Hebeleinheit 20 zu drücken, um eine Sicherungskraft auf die Hebeleinheit 20 auszuüben. Durch die durch das Federelement 76 auf die Hebeleinheit 20 übertragene Sicherungskraft wird die Hebeleinheit 20 in ihren jeweiligen Positionen gegen ein unbeabsichtigtes Bewegen aus der entsprechenden Position gesichert. Dabei ist die Sicherungskraft so groß, dass ein beispielsweise durch Vibration hervorgerufenes Verstellen der Hebeleinheit 20 verhindert wird und eine gewollte Verstellung der Hebeleinheit 20, beispielsweise durch einen Monteur, ohne Probleme möglich ist.

Die Hebeleinheit 20 umfasst ein Montageloch 84, das zu einer Montage- und Demontagehilfe vorgesehen ist. Das Montageloch 84 ist als ein Durchgangsloch ausgebildet und verläuft parallel zu dem als Langloch ausgebildeten Durchgangsloch 74, über das die Hebeleinheit 20 schwenkbar mit dem Horizontalbefestigungselement 16 gekoppelt ist. Das Montageloch 84 ist dazu vorgesehen, dass während einer Montage oder einer Demontage ein Werkzeug in das Montageloch eingeführt werden kann und die Hebeleinheit 20 so mittels des Werkzeugs verschwenkt werden kann, falls die Hebeleinheit 20 beispielsweise verklemmt ist und werkzeugfrei nicht bewegt werden kann.

Die Sitzbefestigung 10 umfasst ein Abstützelement 22, das zur Abstützung der Hebeleinheit 20 vorgesehen ist. Das Abstützelement 22 ist dabei als eine Erhebung ausgebildet, die an den Grundkörper 14 angeformt ist. Das als Erhebung ausgebildete Abstützelement 22 ist dabei an einem Übergang zwischen dem Befestigungselement 38 zur Anbindung des Flugzeugsitzes und dem Plateau 44, auf dem das Horizontalbefestigungselement 16 in montiertem Zustand angeordnet ist. Die Erhebung ist dabei bauchig ausgebildet. Eine Geometrie des als Erhebung ausgebildeten Abstützelements 22 ist dabei korrespondierend zu einer in montiertem Zustand dem vorderen Bereich des Grundkörpers 14 zugewandten Seite der Hebeleinheit 20 ausgebildet. Zu einer Verstellung des Horizontalbefestigungselements 16 zwischen der Verriegelstellung und der Entriegelstellung stützt sich die Hebeleinheit 20 an dem Abstützelement 22 ab. In der Entriegelstellung des Horizontalbefestigungselements 16 stützt sich die Hebeleinheit 20 ebenfalls an dem Abstützelement 22 ab.

Zur Fixierung des Horizontalbefestigungselements 16 in der Entriegelstellung weist der Grundkörper 14 zwei Formschlusselemente 24 auf, wobei dabei je eines der Formschlusselemente 24 auf einer der langen Seiten des Grundkörpers 14 angeordnet sein könnte. Die Formschlusselemente 24 sind dabei gleich ausgebildet, weswegen im Folgenden lediglich eines der Formschlusselemente 24 näher beschrieben wird, wobei die Beschreibung zur Erläuterung des anderen, nicht näher beschriebenen und dargestellten Formschlusselements herangezogen werden kann. Das Formschlusselement 24 ist dabei einstückig mit dem Grundkörper 14 ausgebildet. Dabei ist das Formschlusselement 24 als eine an den Grundkörper 14 angeformte Erhebung ausgebildet. Das Formschlusselement 24 ist an einer der langen Seiten des Grundkörpers 14 in dem Bereich des Plateaus 44 angeordnet. Das Formschlusselement 24 ist dabei an einer Position angeordnet, an der es in einem montierten Zustand des Horizontalbefestigungselements 16 von dem Horizontalbefestigungselement 16 überdeckt wird. Grundsätzlich ist es auch denkbar, dass der Grundkörper 14 lediglich ein Formschlusselement 24 zur Fixierung des Horizontalbefestigungselements 16 aufweist oder dass die zwei oder auch mehr Formschlusselemente 24 jeweils unterschiedlich ausgebildet sind.

Das Horizontalbefestigungselement 16 weist zwei, zu den Formschlusselementen 24 des Grundkörpers 14, die zur Fixierung des Horizontalbefestigungselements 16 in der Entriegelstellung vorgesehen sind, korrespondierend ausgebildete Formschlusselemente 26 auf. Die Formschlusselemente 26 sind dabei jeweils an einer Innenseite des Horizontalbefestigungselements 16, die in montiertem Zustand dem Grundkörper 14 zugewandt ist, angeordnet. Die Formschlusselemente 26 sind dabei jeweils äquivalent zueinander ausgebildet, weswegen nur das eine Formschlusselement 26 näher beschrieben wird, wobei zur Erläuterung des anderen Formschlusselements des Horizontalbefestigungselements 16 dabei die folgende Beschreibung herangezogen werden kann. Das Formschlusselement 26 ist zur Fixierung des Horizontalbefestigungselements 16 dazu vorgesehen, formschlüssig auf dem Formschlusselement 24 des Grundkörpers 14 aufzuliegen. Dabei ist das Formschlusselement 26 des Horizontalbefestigungselements 16 in der Entriegelstellung selbsthemmend mit dem Formschlusselement 24 des Grundkörpers 14 verbunden. Dabei ist das Formschlusselement 26 des Horizontalbefestigungselements 16 so angeordnet, dass das Formschlusselement 26 durch Verschiebung in Vertikalrichtung und durch Verschiebung in Horizontalrichtung in Kontakt mit dem Formschlusselement 24 des Grundkörpers 14 gelangt.

Zur Befestigung der Sitzbefestigung 10 in einer definierten Position in der Befestigungsschiene 12 umfasst die Sitzbefestigung 10 ein Befestigungselement 28. Das Befestigungselement 28 ist als eine Befestigungsschraube ausgebildet. Das Befestigungselement 28 ist in dem Durchgangsloch 60 des Horizontalbefestigungselements 16 und dem Durchgangsloch 46 des Grundkörpers 14 angeordnet. Das Befestigungselement 28 weist ein Außengewinde auf, das korrespondierend zu dem Innengewinde des Durchgangslochs 46 des Grundkörpers 14 ausgebildet ist. Über das Außengewinde kann das Befestigungselement 28 fest mit dem Grundkörper 14 verbunden werden. Das Befestigungselement 28 verbindet das Horizontalbefestigungselement 16 und den Grundkörper 14 fest miteinander. In einem komplett eingeschraubten Zustand wird die Befestigungsschiene 12 zwischen dem Grundkörper 14 und dem Horizontalbefestigungselement 16 eingeklemmt, wodurch das Horizontalbefestigungselement 16 und der Grundkörper 14 zusätzlich an der Befestigungsschiene 12 gesichert werden. Die Sitzbefestigung 10 weist ein Federelement 78 auf, das funktionell zwischen dem Horizontalbefestigungselement 16 und dem Befestigungselement 28 angeordnet ist. Das Federelement 78 ist dabei als Spiralfeder ausgebildet. Das als Spiralfeder ausgebildete Federelement 78 sitzt in der Senkung 62 des Durchgangslochs 60 des Horizontalbefestigungselements 16 und liegt auf einer Unterseite eines Schraubenkopfs des Befestigungselements 28 auf. Eine Kraftübertragung zwischen dem Befestigungselement 28 und dem Horizontalbefestigungselement 16 findet dadurch über das als Spiralfeder ausgebildete Federelement 78 statt. Zur Sicherung des als Befestigungsschraube ausgebildeten Befestigungselements 28 in dem Durchgangsloch des Grundkörpers 14 umfasst die Sitzbefestigung 10 einen Sicherungspin 80, der in einem montierten Zustand in eine Querbohrung des Grundkörpers 14 eingesetzt wird, die quer zu der Längsrichtung des Grundkörpers 14 orientiert ist und die das Durchgangsloch 46, in dem das Befestigungselement 28 geführt ist, tangiert. In montiertem Zustand ragt der Sicherungspin 80 teilweise in das Durchgangsloch 46 des Grundkörpers 14 hinein und bildet einen Anschlag für ein unteres, breiteres Ende des Befestigungselements 28, das die Abstützfläche ausbildet, aus. Dadurch kann ein Herausfallen des Befestigungselements 28 aus dem Grundkörper 14 verhindert werden und das Horizontalbefestigungselement 16 kann dadurch sicher an den Grundkörper 14 angebunden werden.

Die Verriegelungsvorrichtung 18 ist in der Verriegelstellung dazu vorgesehen, das Befestigungselement 28 zu sichern. In einem Zustand, in dem das Befestigungselement 28 eingeschraubt ist und das Horizontalbefestigungselement 16 dadurch fest in dem Grundkörper 14 verbunden ist, sichert die Verriegelungsvorrichtung 18 das Befestigungselement 28 gegen ein Verdrehen und damit gegen ein ungewolltes Lösen des Befestigungselements 28. Dazu bildet die Hebeleinheit 20 ein Formschlusselement 82 aus. Die Hebeleinheit 20 ist dabei hakenförmig ausgebildet. Das Formschlusselement 82 greift dabei zur Sicherung des Befestigungselements 28 formschlüssig in das Befestigungselement 28 ein. Das Formschlusselement 82 der Hebeleinheit 20 greift in eine Kontur des Schraubenkopfes des Befestigungselements 28 ein und verhindert dadurch ein Verdrehen des Befestigungselements 28.

Im Folgenden soll nun kurz ein Lösen der Sitzbefestigung 10 von der Befestigungsschiene 12 und ein anschließendes Verschieben der Sitzbefestigung 10 mit in der Entriegelstellung fixiertem Horizontalbefestigungselement 16 beschrieben werden. Zunächst wird die Hebeleinheit 20 aus ihrer geschlossenen Stellung gedreht und so das Formschlusselement 82 der Hebeleinheit 20 aus dem Schraubenkopf des Befestigungselements 28 entfernt. Dadurch kann das Befestigungselement 28 geöffnet werden. Ist das Befestigungselement 28 aus dem Innengewinde des Durchgangslochs 46 des Grundkörpers 14 entfernt, drückt das als Spiralfeder ausgebildete Federelement 78 das Befestigungselement 28 teilweise aus dem Durchgangsloch 60 des Horizontalbefestigungselements 16. Durch Abstützen der Hebeleinheit 20 an dem Abstützelement 22 des Grundkörpers 14 und Drücken des Formschlusselements 82 der Hebeleinheit 20 in Richtung des Grundkörpers 14 wird das Horizontalbefestigungselement 16 angehoben und so werden die Horizontalformschlusselemente 66, 68 aus den Durchtrittsöffnungen 36 der Befestigungsschiene 12 gehoben. Ist das Horizontalbefestigungselement 16 so weit angehoben, dass die Horizontalformschlusselemente 66, 68 aus den Durchtrittsöffnungen 36 der Befestigungsschiene 12 gehoben sind, wird das Horizontalbefestigungselement 16 in Horizontalrichtung von dem vorderen Bereich des Grundkörpers 14 weg bewegt und wieder ein Stück abgesenkt, so dass die Formschlusselemente 26 des Horizontalbefestigungselements 16 auf den Formschlusselementen 24 des Grundkörpers 14 aufliegen und dadurch das Horizontalbefestigungselement 16 über eine selbsthemmende formschlüssige Verbindung in seiner Entriegelstellung fixiert ist. Dabei sind nun die Horizontalformschlusselemente 66, 68 aus den Durchtrittsöffnungen 36 der Befestigungsschiene 12 gehoben und die Sitzbefestigung 10 kann in der Befestigungsschiene 12 verschoben werden, ohne dass die Horizontalformschlusselemente 66, 68 ungewollt wieder in Durchtrittsöffnungen 36 der Befestigungsschiene 12 eintauchen. So kann die Sitzbefestigung 10 zur Neupositionierung in der Befestigungsschiene 12 verfahren werden oder beispielsweise auch aus der Befestigungsschiene 12 entfernt werden.

Zur Befestigung der Sitzbefestigung 10 an der Befestigungsschiene 12 werden die oben beschriebenen Verfahrensschritte im Wesentlichen in umgekehrter Reihenfolge getätigt. Zunächst wird das Horizontalbefestigungselement 16 mittels der Hebeleinheit 20 der Verriegelungsvorrichtung 18 angehoben und so die formschlüssige Verbindung zwischen dem Horizontalbefestigungselement 16 und dem Grundkörper 14 aufgehoben. Durch Verschiebung des Horizontalbefestigungselements 16 in Richtung des vorderen Bereichs 40 des Grundkörpers 14 treffen die Formschlusselemente 24 des Grundkörpers 14 und die korrespondierenden Formschlusselemente 26 des Horizontalbefestigungselements 16 nicht mehr aufeinander und das Horizontalbefestigungselement 16 kann so wieder in Richtung der Befestigungsschiene 12 gleiten und die Horizontalformschlusselemente 66, 68 können bei Überdeckung mit den Durchtrittsöffnungen 36 wieder in die Durchtrittsöffnungen 36 eingreifen und die Sitzbefestigung 10 so in Horizontalrichtung fixieren. Nun kann das Befestigungselement 28 wieder angezogen werden und die Hebeleinheit 20 zur Sicherung des Befestigungselements 28 mit dem Formschlusselement 82 wieder in den Schraubenkopf des Befestigungselements 28 bewegt werden.

### Bezugszeichen

- 10: Sitzbefestigung
- 12: Befestigungsschiene
- 14: Grundkörper
- 16: Horizontalbefestigungselement
- 18: Verriegelungsvorrichtung
- 20: Hebeleinheit
- 22: Abstützelement
- 24: Formschlusselement
- 26: Formschlusselement
- 28: Befestigungselement
- 30: Formschlusselement
- 32: T-förmige Längsnut
- 34: Längskanal
- 36: Durchtrittsöffnung
- 38: Befestigungselement
- 40: vorderer Bereich
- 42: hinterer Bereich
- 44: Plateau
- 46: Durchgangsloch
- 48: Unterseite
- 50: Formschlusselement
- 52: Formschlusselement
- 54: Formschlusselement
- 56: Seitenbereich
- 58: Mittelbereich
- 60: Durchgangsloch
- 62: Senkung
- 64: Unterseite
- 66: Horizontalformschlusselement
- 68: Horizontalformschlusselement
- 70: Aufnahme
- 72: Lagerachse
- 74: Durchgangsloch
- 76: Federelement
- 78: Federelement
- 80: Sicherungspin
- 82: Formschlusselement
- 84: Montageloch

## Patentansprüche

1. Sitzbefestigung zur Befestigung eines Sitzes, insbesondere eines Flugzeugsitzes, an einer Befestigungsschiene (12), mit zumindest einem Grundkörper (14), der zumindest zur vertikalen Befestigung in der Befestigungsschiene (12) vorgesehen ist, und mit zumindest einem Horizontalbefestigungselement (16), das zumindest zwischen einer Verriegelstellung und einer Entriegelstellung relativ zu dem Grundkörper (14) verschiebbar ist, mit zumindest einer Verriegelungsvorrichtung (18), die dazu vorgesehen ist, das zumindest eine Horizontalbefestigungselement (16) in der Entriegelstellung zu fixieren **dadurch gekennzeichnet, dass** die Verriegelungsvorrichtung (18) zu einer Verstellung des Horizontalbefestigungselements (16) zwischen seiner Verriegelstellung und seiner Entriegelstellung dazu vorgesehen ist, das Horizontalbefestigungselement (16) sowohl in Vertikalrichtung als auch in Horizontalrichtung zu bewegen.

2. Sitzbefestigung nach Anspruch 1, **dadurch gekennzeichnet, dass** das Horizontalbefestigungselement (16) den Grundkörper (14) umgreift.

3. Sitzbefestigung nach einem der vorhergehenden Ansprüche, **dadurch gekennzeichnet, dass** die Verriegelungsvorrichtung (18) zumindest eine Hebeleinheit (20) umfasst, über die das Horizontalbefestigungselement (16) zwischen der Verriegelstellung und der Entriegelstellung verstellbar ist.

4. Sitzbefestigung nach Anspruch 3, **gekennzeichnet durch** zumindest ein Abstützelement (22), das zu einer Abstützung der Hebeleinheit (20) zumindest während einer Verstellung des Horizontalbefestigungselements (16) und der Verriegelstellung vorgesehen ist.

5. Sitzbefestigung nach Anspruch 4, **dadurch gekennzeichnet, dass** das Abstützelement (22) als eine an den Grundkörper (14) angeformte Erhebung ausgebildet ist.

6. Sitzbefestigung nach einem der vorhergehenden Ansprüche, **dadurch gekennzeichnet, dass** der Grundkörper (14) ein Formschlusselement (24) umfasst, auf dem das Horizontalbefestigungselement (16) in der Entriegelstellung zur Fixierung aufliegt.

7. Sitzbefestigung nach Anspruch 6, **dadurch gekennzeichnet, dass** das Formschlusselement (24) als eine an den Grundkörper (14) angeformte Erhebung ausgebildet ist.

8. Sitzbefestigung zumindest nach Anspruch 6, **dadurch gekennzeichnet, dass** das Horizontalbefestigungselement (16) ein Formschlusselement (26) aufweist, das zumindest in der Entriegelstellung formschlüssig selbsthemmend mit dem Formschlusselement (24) des Grundkörpers (14) verbunden ist.

9. Sitzbefestigung nach einem der vorhergehenden Ansprüche, **gekennzeichnet durch** zumindest ein Befestigungselement (28) zu einer Fixierung des Grundkörpers (14), wobei die Verriegelungsvorrichtung (18) zumindest in der Verriegelstellung dazu vorgesehen ist, das Befestigungselement (28) zu sichern.

10. Sitzbefestigung zumindest nach Anspruch 3, **dadurch gekennzeichnet, dass** die Hebeleinheit (20) ein Formschlusselement (30) ausbildet, das zumindest in einer Verriegelstellung zur Sicherung das Befestigungselement (28) formschlüssig in das Befestigungselement (28) eingreift.

11. Flugzeugsitz mit einer Sitzbefestigung (10) nach einem der vorhergehenden Ansprüche.

## Claims

1. Seat mount for fixating a seat, in particular an airplane seat, to a mounting rail (12), with at least one base body (14), which is configured at least for a vertical fixation in the mounting rail (12), and with at least one horizontal-fastening element (16), which is moveable with respect to the base body (14) at least between a locking position and an unlocking position, with at least one locking device (18), which is configured for fixating the at least one horizontal-fastening element (16) in the unlocking position, **characterised in that,** for adjusting the horizontal-fastening element (16) between its locking position and its unlocking position, the locking device (18) is configured to move the horizontal-fastening element (16) both in a vertical direction and in a horizontal direction.

2. Seat mount according to claim 1, **characterised in that** the horizontal-fastening element (16) engages around the base body (14).

3. Seat mount according to any of the preceding claims, **characterised in that** the locking device (18) comprises at least one lever unit (20), via which the horizontal-fastening element (16) is adjustable between the locking position and the unlocking position.

4. Seat mount according to claim 3, **characterised by** at least one support element (22), which is configured to support the lever unit (20) at least during an adjustment of the horizontal-fastening element (16) and the locking position.

5. Seat mount according to claim 4, **characterised in that** the support element (22) is embodied as a bulge moulded to the base body (14).

6. Seat mount according to one of the preceding claims, **characterised in that** the base body (14) comprises a positive-fit element (24) which the horizontal-fastening element (16) is supported on in the unlocking position for the purpose of fixation.

7. Seat mount according to claim 6, **characterised in that** the positive-fit element (24) is embodied as a bulge moulded to the base body (14).

8. Seat mount at least according to claim 6, **characterised in that** the horizontal-fastening element (16) comprises a positive-fit element (26) which is, at least in the unlocking position, connected to the positive-fit element (24) of the base body (14) in a positive-fit, self-retaining implementation.

9. Seat mount according to one of the preceding claims, **characterised by** at least one fixation element (28) for fixating the base body (14), wherein the locking device (18) is configured to secure the fixation element (28), at least in the locking position.

10. Seat mount at least according to claim 3, **characterised in that** the lever unit (20) forms a positive-fit element (30) which engages into the fixation element (28) in a positive-fit implementation, at least in a locking position, for securing the fixation element (28).

11. Airplane seat with a seat mount (10) according to one of the preceding claims.

## Revendications

1. Support de siège pour un accrochage d'un siège, notamment un siège d'avion, à un rail d'accrochage (12), avec au moins un corps de base (14) prévu au moins à un accrochage vertical dans le rail d'accrochage (12) et avec au moins un élément d'accrochage horizontal (16), lequel est déplaçable par rapport au corps de base (14) entre une position de verrouillage et une position de déverrouillage, avec au moins un dispositif de verrouillage (18) prévu à fixer l'au moins un élément d'accrochage horizontal (16) dans la position de déverrouillage, **caractérisé en ce que** le dispositif de verrouillage (18) est configuré à mouvoir l'élément d'accrochage horizontal (16) en direction vertical aussi qu'en direction horizontal pour le but d'ajuster l'élément d'accrochage horizontal (16) entre sa position de verrouillage et sa position de déverrouillage.

2. Support de siège selon la revendication 1, **caractérisé en ce que** l'élément d'accrochage horizontal (16) entoure le corps de base (14).

3. Support de siège selon l'une quelconque des revendications précédentes, **caractérisé en ce que** le dispositif de verrouillage (18) comporte au moins une unité de levier (20), via laquelle l'élément d'accrochage horizontal (16) est ajustable entre la position de verrouillage et la position de déverrouillage.

4. Support de siège selon la revendication 3, **caractérisé par** au moins un élément de soutien (22), lequel est prévu à soutenir l'unité de levier (20) au moins pendant un ajustement de l'élément d'accrochage horizontal (16) et de la position de verrouillage.

5. Support de siège selon la revendication 4, **caractérisé en ce que** l'élément de soutien (22) est implémenté comme une protubérance moulée au corps de base (14).

6. Support de siège selon l'une quelconque des revendications précédentes, **caractérisé en ce que** le corps de base (14) comporte un élément à engagement positif (24), sur lequel l'élément d'accrochage horizontal (16) est porté dans la position de déverrouillage pour le but de fixation.

7. Support de siège selon la revendication 6, **caractérisé en ce que** l'élément à engagement positif (24) est implémenté comme une protubérance moulée au corps de base (14).

8. Support de siège au moins selon la revendication 6, **caractérisé en ce que** l'élément d'accrochage horizontal (16) comporte un élément à engagement positif (26), lequel est, au moins dans la position de déverrouillage, relié à l'élément à engagement positif (24) du corps de base (14) par engagement positif, à blocage automatique.

9. Support de siège selon l'une quelconque des revendications précédentes, **caractérisé par** au moins un élément fixateur (28) pour une fixation du corps de base (14), le dispositif de verrouillage (18) étant prévu, au moins dans une position de verrouillage, à sécuriser l'élément fixateur (28).

10. Support de siège au moins selon la revendication 3, **caractérisé en ce que** l'unité de levier (20) implémente un élément à engagement positif (30), lequel s'engage, au moins dans une position de verrouillage, dans l'élément fixateur (28) par engagement positif pour sécuriser l'élément fixateur (28).

11. Siège d'avion avec un support de siège (10) selon l'une quelconque des revendications précédentes.
